(19) Europäisches Patentamt

European Patent Office

Office européen des brevets

(11) **EP 2 233 736 B1**

(12) **EUROPEAN PATENT SPECIFICATION**

(45) Date of publication and mention
of the grant of the patent:
**16.08.2017 Bulletin 2017/33**

(21) Application number: **10157393.9**

(22) Date of filing: **23.03.2010**

(51) Int Cl.:
*F03D 7/02* *(2006.01)*  *F03D 7/04* *(2006.01)*

(54) **Control method of a wind turbine and wind trubine**

Steuerungsverfahren einer Windturbine sowie Windturbine

Procédé de commande d'éolienne et éolienne

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **23.03.2009 ES 200900783**

(43) Date of publication of application:
**29.09.2010 Bulletin 2010/39**

(73) Proprietor: **Acciona Windpower S.A.**
**31621 Sarriguren, Navarra (ES)**

(72) Inventors:
• **Garcia Barace, Alberto**
**31621, Sarriguren (Navarra) (ES)**
• **Egaña Santamarina, Igor**
**31621, Sarriguren (Navarra) (ES)**
• **Torres Elizondo, Antonio**
**31621, Sarriguren (Navarra) (ES)**
• **Tonks, Stephen**
**31621, Sarriguren (Navarra) (ES)**
• **Azanza Ladrón, Eduardo**
**31621, Sarriguren (Navarra) (ES)**
• **García Sayés, José Miguel**
**31621, Sarriguren (Navarra) (ES)**
• **Nuñez Polo, Miguel**
**31621, Sarriguren (Navarra) (ES)**

(74) Representative: **Pons**
**Glorieta Ruben Dario 4**
**28010 Madrid (ES)**

(56) References cited:
**EP-A1- 1 988 284**    **WO-A2-2008/131776**
**DE-A1- 10 232 021**    **GB-A- 2 428 748**
**US-A1- 2003 160 457**    **US-A1- 2006 002 797**

**Description**

**OBJECT OF THE INVENTION**

This invention relates to a control method of a wind turbine, the wind turbine being of variable speed and blade pitch angle control, in order to evaluate weather conditions capable of provoking overspeeds in the rotation of the rotor, for the purpose of detecting and preventing them by means of a reduction in power.

Thus, a first object of the invention is to provide a method for detecting weather conditions that affect the variability of the rotational speed of the rotor.

A second object of the invention is to provide a reduction in the maximum power to be generated by the turbine.

A third object of the invention is to provide a method to detect accurately conditions for shutdown due to excess wind.

A fourth object of the invention is a wind turbine comprising a rotor, a blade pitch adjustment system, and a calculating unit adjusted to carry out the method according to this invention.

**FIELD OF APPLICATION**

The present specification describes a control method for wind turbines of variable speed and blade pitch control that detects a control parameter indicative of the fluctuations in the rotational speed of the rotor foreseeable as a result of wind turbulence, compares it to a threshold value, and reduces the maximum power to be generated by the wind turbine if the control parameter exceeds the threshold value.

In this way, the mechanical loads associated with shutdowns and start-ups caused by overspeeds in the rotation of the rotor are reduced, and the wind turbine is maintained producing in difficult wind conditions.

**BACKGROUND OF THE INVENTION**

Due to the increasing average size of the rotors installed in wind turbines, and the need to limit the loads produced by the wind while guaranteeing the maximum possible power performance, variable speed and blade pitch control technologies have expanded.

Said wind turbines function by maximising their aerodynamic performance in a low winds regime thanks to their capacity of working with a variable rotational speed of the rotor, limit their rotational speed by modulating the torque in the power generator in a determined medium winds regime, and at high winds restrict the rotational speed of the rotor against gusts thanks to the control of the blade pitch angle generating the nominal power.

In said high winds regime, when the wind turbine produces the nominal power and the blade pitch angle limits the speed, a set of protective actions are established. Said actions usually comprise the carrying out of a shutdown operation, in other words, disconnection of the wind turbine, taking the blades to the feathered position either when a certain rotational speed of the rotor is exceeded, or when certain wind values above certain thresholds are detected, among other circumstances. Nonetheless, although these manoeuvres protect the wind turbine in severe weather conditions that can last for hours, they also subject it to fatigue caused by the sudden disconnection and the fast moving of the blades into the feathered position, and prevent power generation for the time that the shutdowns lasts.

At the same time, turbulence intensity, usually defined as the quotient of the standard deviation of wind speed divided by mean wind speed evaluated over a period of time, is used in order to characterise the wind. The intensity of turbulence measured at a specific location depends among other factors on the wind speed and direction, the height above ground, and the complexity of the surrounding terrain.

Patent GB2428748 describes a method of operating a wind turbine, which over and above a pre-set limit wind speed value, contemplates the reduction of the rotational speed of the rotor and/or power of the generator when certain threshold values are exceeded in the impact direction of the wind in respect of the axial line of the turbine and of the wind turbulence.

Patent application EP1988284 presents a method of operating a wind turbine wherein the rotational speed of the rotor and/or the power output is reduced according to the deviation in the wind speed in respect of its average, once a certain threshold value has been exceeded.

**DESCRIPTION OF THE INVENTION**

The present specification describes a control method for a wind turbine of variable speed and blade pitch angle control, according to claim 1. The control parameter presented in this invention reflects the effect of turbulence on the foreseeable variability in the rotor speed. Therefore, unlike turbulence intensity, a sign that characterises the properties of the wind, the proposed control parameter describes the effect of the wind on the rotational speed of the wind turbine rotor.

It is possible to gather historical data of the wind turbine in operation using a control system. From said historical data it is possible to analyse as of which threshold value of the control parameter, situations of overspeeds occur in the rotation of the rotor. Said historical records can be replaced by computer simulations of the wind turbine evaluated with said control system, for the purpose of deducing said threshold. In this way, either through experiment or simulation, it is possible to define the threshold value of the control parameter.

By comparing the control parameter to the threshold value, it is deduced whether the risk of an emergency shutdown occurring is too high to allow certain operating conditions. To this effect, by means of the corresponding reduction in the maximum power to be generated by the wind turbine, it is prevented from operating in such working conditions that in adverse weather conditions overspeeds, and therefore, shutdowns will occur.

Said process of defining the control parameter threshold value which requires the appropriate functioning conditions for a wind turbine with a control system, can be repeated for different potential power reduction conditions and for different control algorithms.

In a preferred embodiment of the invention, the signal indicative of the wind power is obtained from the value resulting from cubing a signal indicative of the wind.

In a preferred embodiment of the invention, the signal indicative of the wind turbulence is obtained on the basis of the deviation between the signal indicative of the wind and the mean of the signal indicative of the wind over a period of time.

In a preferred embodiment, the blade pitch angle is used as the signal indicative of the wind.

In this way, the wind measurement used to evaluate the control parameter comprises that resulting from the wind over the entire area swept by the rotor, and also avoids the effect induced by the blades passing over the meteorological equipment usually situated on the nacelle, downwind in relation to the rotor.

In another aspect of the invention when the wind turbine is stopped, a measurement from an anemometer situated on the turbine's nacelle is used as the signal indicative of the wind, using the control parameter in order to calculate the maximum power to be generated by the turbine following a start-up. This measurement of the control parameter may be redundant in respect of that based on the blade pitch angle, and is useful in various situations. For example, in a start-up of the machine it is possible to calculate the maximum power to be generated by the turbine if the measurement of the control parameter based on the anemometer on the nacelle is available.

In addition, in the low and medium winds zone when there is no activity in the blade pitch control system in order to regulate the rotational speed of the rotor, this measurement can be used to guarantee the safe functioning of the turbine upon an increase in the average wind speed that forces the blade pitch angle to be controlled in order to regulate the speed.

The control parameter can be calculated even when the wind turbine is stopped, a situation when at the same time, there is no disturbance caused by the blade's pitch on the wind speed measurement. The control parameter calculated in this way is used to distinguish whether the weather conditions require a reduction in power to prevent potential situations of overspeed in the rotor's rotation.

In another object of the invention, the method comprises the following additional steps:

- obtaining a second control parameter, indicative of the severity of a change in the wind speed, calculated as the integral of the absolute value of the derivative of a second signal indicative of the wind,
- comparing the second control parameter to a second threshold value,
- reducing the maximum power to be generated by the wind turbine if the second control parameter exceeds the second threshold value.

This second control parameter is calculated in a different time interval to the one above, which in a preferred embodiment is lower than that used for the calculation of the first control parameter. In this way the wind turbine is protected against extreme transient weather situations.

This second control parameter constitutes an accessory to the first control parameter, since it detects wind dynamics in a different frequency range which are likely to provoke overspeeds in the wind turbine rotor.

In a preferred embodiment of the invention as a second signal indicative of the wind the blade pitch angle is used.

In one aspect of the invention, the reduction in the maximum power to be generated by the wind turbine is carried out by reducing the nominal rotational speed of the rotor, in other words, the rotational speed of the wind turbine when the maximum permissible power is produced.

In another aspect of the invention, the reduction in the maximum power to be generated by the wind turbine comprises also the step of increasing the minimum blade pitch angle.

In another aspect of the invention, the reduction in the maximum power to be generated by the wind turbine comprises also the step, in the high winds regime wherein the rotational speed of the rotor is limited by means of the blade pitch angle control, of maintaining the torque required of the generator substantially constant.

By imposing a constant torque approach in the strategy of reducing the maximum power to be generated by the turbine, the potential dynamic instability resulting from potential constant power control strategies is avoided.

In another object of the invention, the control method comprises also the following additional steps:

- Obtaining a third control parameter indicative of the wind speed based on the blade pitch angle.
- Comparing the third control parameter with a third threshold value.
- Activating the shutdown manoeuvre if the third control parameter exceeds the third threshold value.

This control method based on a third control parameter guarantees that the wind turbine only functions in design operating conditions, avoiding overloads caused by excessive wind.

In this way, the wind measurement used for the evaluation of the control parameter comprises that resulting from the wind over the entire area swept by the rotor, and also avoids the effect induced by the blade pitch over the meteorological equipment usually situated on the nacelle, downwind.

In another aspect of the invention, there is also a check of the correlation between the blade pitch angle and a signal indicative of the wind impacting on the wind turbine measured with at least one anemometer, in such a way that if not verified, the shutdown manoeuvre is activated.

Among other causes, ice or dirt that sticks to the blades can alter their aerodynamics. Among other causes, these circumstances provoke variations in the relationship between the blade pitch angle and the average wind impacting on the wind turbine for a reduction of the maximum power to be generated. By verifying a good correlation between these measurements one can guarantee the reliability of the estimate of average wind impacting on the turbine based on the blade pitch angle.

In a preferred embodiment, said correlation is carried out in such a way that the signal indicative of the wind impacting on the wind turbine comes from at least one anemometer situated on a wind turbine or nearby meteorological tower.

In this way, advantage is taken of the existence of nearby anemometers in order to increase the system's reliability. If the anemometer of the wind turbine's nacelle should not function correctly, the wind impacting on the turbine can be estimated either from the signals coming from nearby wind turbines or from a measurement coming from a nearby meteorological tower.

In another object of the invention a wind turbine is presented which comprises a rotor, a blade pitch angle adjustment system, and a calculating unit to carry out the control method described above.

## BRIEF DESCRIPTION OF THE DRAWINGS

Figures 1 and 2, show the typical layout of an aerogenerator, comprising a tower, a nacelle and a rotor made up of several blades.

Figure 3 shows the main components of the nacelle, according to lateral view.

Figure 4 shows the modules or stages of a preferred embodiment of one of the objects of the control method and system of the invention.

Figure 5 shows the modules or stages of a preferred embodiment of another of the objects of the control method and system of the invention.

Figure 6 shows the modules or stages of a preferred embodiment of another of the objects of the control method and system of the invention.

Figure 7 shows the relationship existing between the blade pitch angle of a wind turbine of variable speed and blade pitch angle control towards feathered, according to the average wind impacting on the wind turbine.

Figure 8 shows the graph of a stationary curve of electrical torque according to the rotational speed of the rotor.

## DESCRIPTION OF A PREFERRED EMBODIMENT

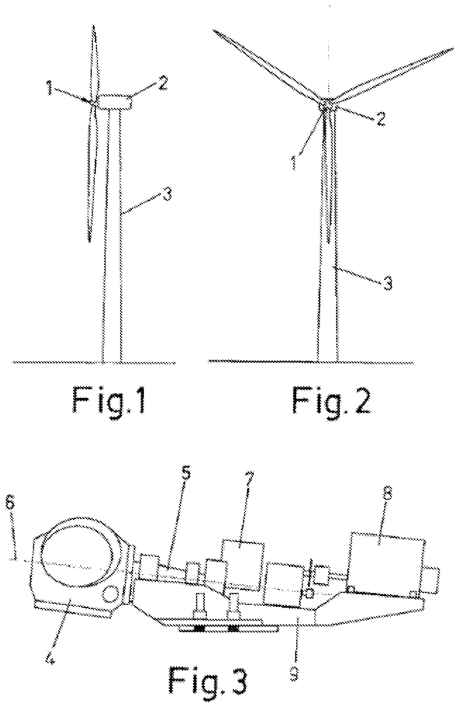

Figures 1 and 2 show an aerogenerator, said aerogenerator consisting of a tower 3, a nacelle 2 and a rotor 1 made up of several blades and said rotor rotating in respect of an axis.

Figure 3 illustrates the main components of the nacelle from a lateral view, in such a way that said rotor of the aerogenerator rotates around a substantially horizontal axis 6 comprising mainly a hub 4, a low speed shaft 5, a multiplier 7 and a power generator 8 that converts the mechanical energy into electrical energy. The assembly is supported by a frame 9.

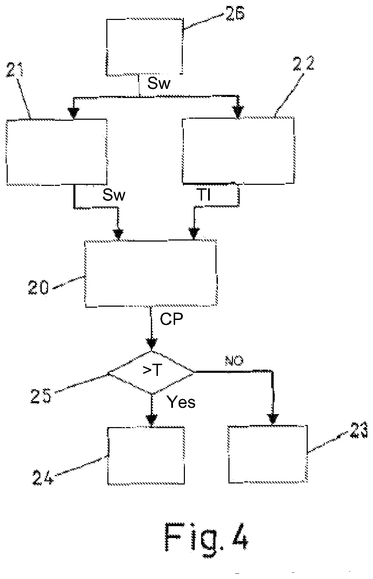

Figure 4 shows the modules or stages of a preferred embodiment of the control method and system of the invention. In a preferred embodiment of the invention, in a stage 20 a control parameter (CP) indicative of the fluctuations of the rotational speed of the rotor foreseeable as a result of the wind turbulence, calculated on the basis of a signal (Pw) indicative of the wind power, calculated in a stage 21, and a signal (TI) indicative of the turbulence intensity of the wind, calculated in a stage 22.

The control parameter (CP) is compared to a threshold value (T), in such a way that if the control parameter surpasses said threshold a safe mode is entered into 24, reducing the maximum power to be generated by the wind turbine. If the control parameter (CP) does not surpass the threshold (T), the wind turbine remains in normal functioning mode 23.

The reduction in the maximum power to be generated only affects high winds, when the rotational speed of the rotor is regulated through adjustment of the blade pitch angle.

In order to establish the value of said threshold (T), in a preferred embodiment historical data is gathered of a wind turbine functioning with a control system and a given set of control parameters. From this historical data the occurrence of overspeeds can be analysed according to the proposed control parameter, and a threshold value can be deduced.

In a preferred embodiment, said threshold value (T) is selected to maximise the energy produced considering the trade-off made for loss of availability due to wind turbine shutdowns for overspeeds and the reduction in power caused by said strategy, without prejudice to the turbine's useful life due to the fatigue caused in either case.

In other preferred embodiments, other criteria could be considered for selecting the threshold value, such as for example increasing the energy produced.

In a preferred embodiment, a set of threshold power values are selected ordered from lowest to highest, in such a way that according to the number of threshold values exceeded by the control parameter, a rising level of power reduction is activated.

To this effect, in said preferred embodiment wherein a set of threshold values (T) are selected ordered from lowest to highest, if in module 25 the control parameter (CP) surpasses in various comparisons the same number of threshold values, state 23 is equivalent to maintaining constant the level of reduction of maximum power to be generated. On the contrary, if in the comparison 25 the number of threshold values exceeded by the control parameter (CP) were to increase or decrease, state 24 is equivalent to increasing or decreasing the level of reduction of maximum power to be generated by the turbine.

In a preferred embodiment of the invention, the signal indicative of the wind power (Pw) is obtained in stage 21 based on the value resulting from cubing a signal indicative of the wind (Sw). In a preferred embodiment, additionally, previous calculation is made of the average ($\overline{Sw}$) of the signal indicative of the wind over a period of time.

$$Pw = \left(\overline{Sw}\right)^3$$

In another aspect of the invention, in a preferred embodiment of the invention the signal indicative of the wind's turbulence (TI) is obtained in stage 22 based on the deviation between the signal indicative of the wind (Sw) and the average of the signal indicative of the wind over a period of time.

In a preferred embodiment the signal indicative of the wind's turbulence, is the turbulence intensity defined as the quotient of the standard deviation of a signal indicative of wind divided by the mean of said signal indicative of the wind ($\overline{Sw}$.)

$$TI = \frac{\sigma(Sw)}{Sw}$$

In a preferred embodiment, the control parameter (CP) is obtained as the product of the signal indicative of wind power multiplied by the signal indicative of turbulence:

$$CP = Pw \cdot TI = \left(\overline{Sw}\right)^2 \cdot \sigma(Sw)$$

Usually wind turbines incorporate an anemometer on the nacelle in order to measure the wind velocity. This measurement from the anemometer can be used as the signal indicative of the wind (Sw). However, in a generator with a rotor oriented upwind the measurements obtained have the inconvenience of gathering the effect of turbulence caused by the pitch of the blades. Additionally said measurements are a single point measurement, not fully representative of the wind impacting on the area swept by the rotor. There are other operative parameters of the turbine that indicate the speed of the wind impacting on the turbine. In a preferred embodiment the signal indicative of the wind (Sw) is obtained in a stage 26 based on the blade pitch angle ($\beta$) us a signal indicative of the wind (Sw).

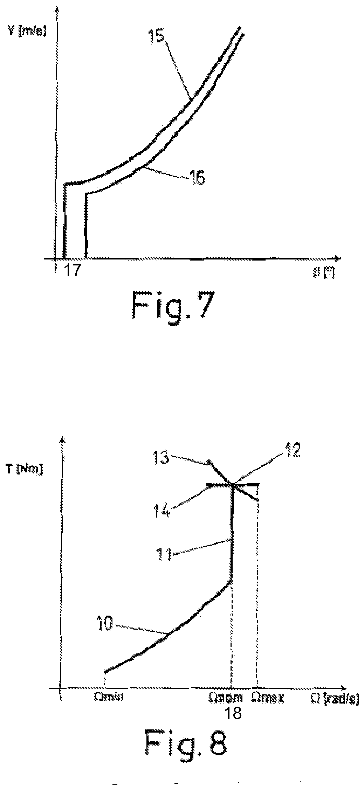

The blade pitch angle is used to adjust the power captured from the wind. Figure 7 presents the relationship existing between the average wind impacting on the wind turbine (W) and the blade pitch angle ($\beta$) of a wind turbine of variable speed and control by adjustment of the blade pitch angle towards feathering. In general, said type of wind turbine follows a curve 15 upon producing a maximum power to be generated equal to its nominal power. At low and average winds, producing a lower power than the nominal one the blade pitch angle is substantially maintained over a minimum blade pitch angle 17, and at high winds an average power is produced equal to the nominal power for which the blade pitch angle is moved towards feathered, reducing the angle of attack. If the wind turbine were to function with a certain level of power reduction, the relationship between the blade pitch angle and the wind impacting on the turbine would follow a different path 16.

Similarly, wind turbines of variable speed and control by adjustment of the blade pitch angle towards stall also maintain the blade pitch angle ($\beta$) substantially constant in the regime of production of nominal power over an angle 17. At the same time, at high winds the power is maintained constant by increasing the angle of attack. In a similar manner, the minimum blade pitch angle 17 to which the invention refers, in the case of wind turbines of variable speed and control by adjustment of blade pitch angle towards stall corresponds to a maximum blade pitch angle.

Therefore the signal indicative of the wind (Sw) is calculated in a preferred embodiment on the basis of the blade pitch angle and the relationship 15 between the blade pitch angle and the wind.

$$\mathrm{Sw} = g(\beta)$$

In a preferred embodiment of the invention this last expression can be used to deduce the control parameter (CP) according to the following expression,

$$\mathbf{CP} = \left(\overline{\mathbf{Sw}}\right)^2 \cdot \sigma(\mathbf{Sw}) \approx g^2(\overline{\boldsymbol{\beta}}) \cdot \sigma(g(\boldsymbol{\beta})) \approx g^2(\overline{\boldsymbol{\beta}}) \cdot \left.\frac{\partial g}{\partial \boldsymbol{\beta}}\right|_{\overline{\boldsymbol{\beta}}} \cdot \sigma(\boldsymbol{\beta})$$

($\overline{\beta}$) being the mean pitch angle.

Figure 8 illustrates a stationary curve of electrical torque required from the power generator according to the rotational speed of the rotor, commanded by the control system for the case of a variable speed aerogenerator. In said curve, there is a zone 10 of energy generation for low winds wherein the aerodynamic performance is maximised thanks to the turbine's capacity of functioning at variable speed, a zone 11 of generation at medium winds wherein the rotational speed is limited to the nominal speed 18, modulating the torque in the power generator, and a point 12 of nominal power generation at high winds whose rotational speed is regulated by means of the blade pitch angle control. Said adjustment is carried out by means of a reference of rotational speed, which adjusts to the nominal speed 18. At said stationary point of nominal power generation, variations in the rotational speed of the rotor are allowed in a transient manner, which can either be according to a certain curve 13 of constant power, or according to a certain curve 14 of constant torque, or even through a strategy that combines the two.

The wind speed of an anemometer situated on the turbine's nacelle, albeit with the inconveniences mentioned above, provides a redundant estimation indicative of the wind. In a preferred embodiment the measurements of an anemometer are used for the calculation of the control parameter in those functioning regimes of the machine where there is not an active control of the blade pitch angle in order to regulate the rotational speed of the rotor. In this way, it is possible to contemplate reductions of maximum power to be generated in the start-ups of the wind turbine, or in transients of medium winds to high winds.

In a preferred embodiment, the period of time for which measurements of signals indicative of the wind and of the wind's turbulence intensity are taken for the estimation of the proposed control parameter is 10 minutes.

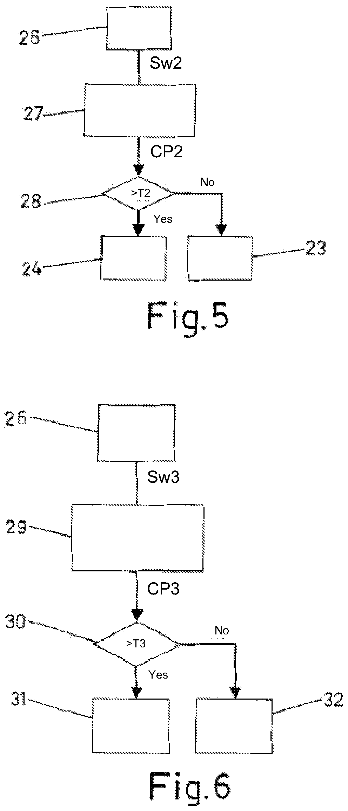

Figure 5 shows the modules or stages of a preferred embodiment, wherein a second control parameter is obtained (CP2) in 27 indicative of the severity of a change in the wind velocity calculated on the basis of the integral of the absolute value of a derivative of a second signal indicative of the wind (Sw2), obtained from a module 26,

$$\mathrm{CP2} = \int_{t_0}^{t_0+\Delta t} \left|\frac{d\mathrm{Sw2}}{dt}\right| \cdot dt$$

In a preferred embodiment, the second signal indicative of the wind (Sw2) is obtained from the blade pitch angle.

The second control parameter (CP2) is compared 28 with a second threshold value (T2), in such a way that the maximum power to be generated by the wind turbine is reduced moving into safe mode 24 defined by a certain reduction in the maximum power to be generated if the control parameter exceeds said threshold. In the opposite case, normal mode 23 is maintained. The safe mode 24 activated by the second control parameter (CP2) surpassing the threshold (T2) lasts a certain period of time, thereafter returning to normal mode 23. Normal mode 23 thus defined can perfectly include any level of power reduction activated by the control parameter (CP).

The threshold (T2) in a preferred embodiment is calculated on the basis of historical data with a similar procedure to the one already described herein for adjusting the threshold (U).

In a preferred embodiment of the invention, this second control parameter is evaluated in time intervals of between 20 and 30 seconds.

When either control parameter (CP) or (CP2) exceeds its respective limits, the wind turbine enters a safe mode 24. Said safe mode consists of reducing the power generated and its objective is to reduce the probabilities of the turbine shutting down due to overspeed. In a preferred embodiment, the reduction in the maximum power to be generated is carried out reducing the reference of the rotational speed of the rotor, in other words, the nominal speed 18.

In a preferred embodiment, the reduction of the nominal speed 18 affects the high winds zone, in other words, the zone of nominal power production 12, and likewise affects the zone of limiting the rotational speed by modulating torque, in other words, the zone of medium winds 11.

Alternatively, in another preferred embodiment, the reduction in nominal speed 18 affects the high winds zone exclusively, in other words, the zone of nominal power production 12 at the same time as the speed in the medium winds zone 11 is maintained fixed.

In a preferred embodiment a low-pass filter is applied in order to soften the change in the rotational speed of the rotor.

In a preferred embodiment, the reduction in the maximum power to be generated by the wind turbine comprises additionally the step of increasing the minimum blade pitch angle 17. In Figure 7 one can see the curve 15 of the blade pitch angle in normal mode 23 and a curve 16 corresponding to safe mode 24.

In a preferred embodiment, the reduction in the maximum power to be generated by the wind turbine comprises additionally the step of maintaining the required torque constant. In Figure 8 one can see a constant torque control 13, corresponding to normal mode 23 and a constant torque control 14, corresponding to safe mode 24.

Figure 6 shows the modules or stages of a preferred embodiment of the control method and system of another aspect of the invention wherein in 29 a third control parameter (CP3) is obtained from a third value indicative of the wind (Sw3) obtained in 26 based on the blade pitch angle. Said third control parameter (CP3) indicative of the wind is compared with a third threshold parameter (T3), in such a way that if it is exceeded, the shutdown manoeuvre 31 is activated. In the opposite case, the wind turbine continues to function 32.

In a preferred embodiment, the third threshold value is not unique, rather a set of threshold power values is selected depending on the previously applied reduction in maximum power to be generated. In a preferred embodiment, said set of threshold values is obtained by means of computer simulations.

In another aspect of the invention, the correlation is verified between the blade pitch angle and the wind impacting on the wind turbine measured with at least one anemometer for a maximum power reduction carried out, and if said verification is negative, a shutdown manoeuvre 31 is executed.

In a preferred embodiment, various curves are obtained 15 which relate the blade pitch angle ($\beta$) and the wind impacting on the rotor (V) for each reduction in maximum power, and a tolerance margin of adjustment to said curves is obtained for each estimated condition of functioning. Said correlation is carried out from averages or filtered signals of the blade pitch angle ($\beta$) and the wind measured with an anemometer, which in a preferred embodiment include samples taken in a total period of 10 minutes.

In a preferred embodiment, the signal indicative of the wind affecting the wind turbine comes from at least one anemometer situated on the nacelle of the wind turbine itself.

In another aspect of the invention, in a preferred embodiment, if there is no wind signal available from an anemometer installed on the nacelle of the turbine itself, the correlation between the wind affecting the rotor and the blade pitch angle is carried out through an estimation of the wind impacting on the turbine, calculated on the basis of the signal coming from at least one adjacent turbine or from a nearby meteorological tower.

For this purpose wind turbines send to a unit that controls the wind farm the estimation of the speed and direction of the impacting wind from their own anemometers and wind vanes situated on the nacelle and an indicator regarding the reliability of said signal. Said reliability indicator can be estimated for example from the correlation between the wind velocity provided by the anemometer and the blade pitch angle.

Stages 20, 21, 22, 23, 24, 25, 26, 27, 28, 29, 30, 31 and 32 could be independent modules or alternatively a calculating unit may be adjusted in order to carry out the calculations described above.

In an alternative embodiment, when one of the control parameters described above exceeds its corresponding threshold value the speed and/or power control loop is modified, in order to modify its dynamic. Usually, the speed control loop acts on the blade pitch angle adjustment system, whereas the power control loop acts on the torque required from the generator. By allowing faster dynamics in the blade pitch angle and/or the torque in the generator, one achieves the control having a greater capacity to respond to potential overspeeds caused by gusts of wind. In a preferred embodiment, said modification of the dynamic is carried out either through a change in the parameters of the controller, for example by modifying the gains of a proportional-integral type controller (PI), or through a modification of the filtering of the signal that feeds the controller itself, or through an increase in the saturation limits of the angular speed of the blade pitch adjustment system, or through a combination of several such modifications. This is therefore an alternative way of preventing overspeeds that can replace the reduction in power and/or speed. Alternatively, in a simultaneous manner control loops can be modified and the power and/or speed of the machine can be reduced.

In the functioning mode whereby the aerogenerator limits its power through a variation in the blade pitch angle, the rotational speed of the rotor is not a signal indicative of the wind velocity. Nonetheless, the dynamic of the transients in the wind velocity does produce transients in the speed of the rotor which cause the control system to activate, adjusting the blade pitch angle. In this way, the control system maintains the rotational speed of the rotor under control around a reference value.

In an embodiment for the calculation of the second control parameter described above, as a signal indicative of a derivative of the wind the acceleration of the rotor's rotation is used. Said acceleration may be measured or estimated. In an equivalent fashion the acceleration in the rotation of the power generator can be used.

## Claims

1. CONTROL METHOD OF A WIND TURBINE, of the type of wind turbine with variable speed and blade pitch angle control, **characterised in that** it comprises the following steps:

   a. determining a signal indicative of the power of the wind and a signal indicative of the turbulence intensity of the wind;
   b. calculating a control parameter on the basis of the signal indicative of the power of the wind and the signal indicative of the turbulence intensity of the wind, wherein such control parameter is indicative of the foreseeable fluctuations in the rotational speed of the rotor due to wind turbulence,
   c. comparing the control parameter with a threshold value as of which situations of overspeed of the rotor occur,
   d. reducing the maximum power to be generated by the wind turbine if the control parameter exceeds said threshold so that overspeed of the rotor and therefore shutdowns of the wind turbine are prevented.

2. CONTROL METHOD OF A WIND TURBINE, according to claim 1, **characterized in that**, in step b., the control parameter is calculated as:

$$Cp = Pw * TI$$

   wherein Cp is the control parameter, Pw is the signal indicative of power of the wind and TI is the signal indicative of the turbulence intensity of the wind.

3. CONTROL METHOD OF A WIND TURBINE, according to any of claims 1 or 2, **characterized in that** the signal indicative of the power of the wind and the signal indicative of the turbulence intensity of the wind are calculated on the basis of a signal indicative of the wind.

4. CONTROL METHOD OF A WIND TURBINE, according to claim 3, **characterised in that** the signal indicative of the power of the wind is obtained from a value resulting from cubing a signal indicative of the wind.

5. CONTROL METHOD OF A WIND TURBINE, according to any of claims 3 or 4, **characterized in that** the signal indicative of the power of the wind is obtained from an anemometer.

6. CONTROL METHOD OF A WIND TURBINE, according to claim 5, wherein the anemometer is situated on the wind turbine.

7. CONTROL METHOD OF A WIND TURBINE, according to claim 5, wherein the anemometer is situated on a meteorological tower.

8. CONTROL METHOD OF A WIND TURBINE, according to any of claims 2 or 3, **characterised in that** it uses, as the signal indicative of the wind, the blade pitch angle.

9. CONTROL METHOD OF A WIND TURBINE, according to any of claims 2 to 8, **characterised in that** the signal indicative of wind turbulence is obtained from the deviation between the signal indicative of the wind and the average of the signal indicative of the wind over a period of time.

10. CONTROL METHOD OF A WIND TURBINE, according to any of claims 2 to 9, **characterised in that** when the wind turbine is stopped, as the signal indicative of the wind a measurement of an anemometer situated on the turbine's nacelle is used, using the control parameter in order to calculate the maximum power to be generated by the turbine following a start-up.

11. CONTROL METHOD OF A WIND TURBINE, according to claim 1, **characterised in that** it comprises the following additional steps:

   e. calculating a second control parameter, as the integral of the absolute value of a derivative of a second signal indicative of the wind, being such second control parameter indicative of the severity of a change in wind speed, calculated,
   f. comparing the second control parameter with a second threshold value,
   g. reducing the maximum power to be generated by the wind turbine if the second control parameter exceeds the second threshold value.

12. CONTROL METHOD OF A WIND TURBINE, according to claim 11, **characterised in that** it uses as the second signal indicative of the wind the blade pitch angle.

13. CONTROL METHOD OF A WIND TURBINE, according to any of the previous claims, **characterised in that** the reduction of the maximum power to be generated by the wind turbine is carried out by reducing the nominal speed of the rotor (18), in other words, the rotational speed of the wind turbine when the maximum permissible power is produced.

14. CONTROL METHOD OF A WIND TURBINE, according to claim 13, **characterised in that** the reduction of the maximum power to be generated by the wind turbine comprises also the step of increasing the minimum blade pitch angle (17).

15. CONTROL METHOD OF A WIND TURBINE, according to claim 14 **characterised in that** the reduction in the maximum power to be generated by the wind turbine comprises also the step, in the high winds regime (12) when the rotational speed of the rotor is limited by controlling the blade pitch angle, of maintaining the torque required of the generator substantially constant (14).

16. CONTROL METHOD OF A WIND TURBINE, according to claim 1, **characterised in that** it comprises also the following additional steps:

   h. obtaining a third control parameter indicative of the wind speed based on the blade pitch angle.
   i. comparing the third control parameter with a third threshold value,
   j. activating the shutdown manoeuvre if the third control parameter exceeds the third threshold value.

17. CONTROL METHOD OF A WIND TURBINE, according to claim 16, **characterised in that** the correlation is verified between the blade pitch angle and a signal indicative of the wind impacting on the wind turbine obtained from at least one anemometer, in such a way that if not verified, the shutdown manoeuvre is activated.

18. CONTROL METHOD OF A WIND TURBINE, according to claim 17, **characterised in that** the signal indicative of the wind impacting on the wind turbine is provided by a central control, which calculates it based on at least one anemometer situated on a wind turbine or nearby meteorological tower.

19. CONTROL METHOD OF A WIND TURBINE, according to claim 1, **characterised in that** it comprises the following additional steps:

   k. obtaining a second control parameter, indicative of the severity of a change in the wind speed, calculated as the integral of the absolute value of the derivative of a second signal indicative of the wind,

l. comparison of the second control parameter with a second threshold value,

m. if the second control parameter exceeds the threshold value, reduction of the maximum power to be generated by the wind turbine and/or reduction in the rotational speed of the rotor and/or modification of the dynamic of the speed and power control loops.

20. WIND TURBINE, comprising a rotor, a blade pitch adjustment system and a calculating unit, **characterised in that** it is configured to carry out a method according to any of the preceding claims.

**Patentansprüche**

1. STEUERUNGSVERFAHREN EINER WINDTURBINE, der Art einer Windturbine mit variabler Geschwindigkeit und Steuerung des Blattanstellwinkels, **dadurch gekennzeichnet, dass** es die folgenden Schritte umfasst:

   a. Bestimmen eines Signals, welches die Kraft des Windes anzeigt, und eines Signals, welches die Turbulenzintensität des Windes anzeigt;

   b. Berechnen eines Steuerungsparameters, basierend auf dem Signal, welches die Kraft des Windes anzeigt, und dem Signal, welches die Turbulenzintensität des Windes anzeigt, wobei ein solcher Steuerungsparameter die vorhersehbaren Schwankungen bei der Drehzahl des Rotors aufgrund der Windturbulenz anzeigt,

   c. Vergleichen des Steuerungsparameters mit einem Schwellenwert in Bezug darauf, welche Situationen der Überdrehzahl des Rotors auftreten,

   d. Verringern der maximalen Leistung, die von der Windturbine erzeugt werden soll, wenn der Steuerungsparameter den Schwellenwert übersteigt, sodass eine Überdrehzahl des Rotors und somit Abschaltungen der Windturbine vermieden werden.

2. STEUERUNGSVERFAHREN EINER WINDTURBINE, nach Anspruch 1, **dadurch gekennzeichnet, dass** in Schritt b. der Steuerungsparameter nach Folgendem berechnet wird:

$$Cp = Pw * TI$$

wobei Cp der Steuerungsparameter ist, Pw das Signal ist, welches die Kraft des Windes anzeigt, und TI das Signal ist, welches die Turbulenzintensität des Windes anzeigt.

3. STEUERUNGSVERFAHREN EINER WINDTURBINE, nach einem der Ansprüche 1 oder 2, **dadurch gekennzeichnet, dass** das Signal, welches die Kraft des Windes anzeigt, und das Signal, welches die Turbulenzintensität des Windes anzeigt, basierend auf einem Signal, welches den Wind anzeigt, berechnet werden.

4. STEUERUNGSVERFAHREN EINER WINDTURBINE, nach Anspruch 3, **dadurch gekennzeichnet, dass** das Signal, welches die Kraft des Windes anzeigt, aus einem Wert erhalten wird, der sich aus dem Kubieren eines Signals ergibt, welches den Wind anzeigt.

5. STEUERUNGSVERFAHREN EINER WINDTURBINE, nach einem der Ansprüche 3 oder 4, **dadurch gekennzeichnet, dass** das Signal, welches die Kraft des Windes anzeigt, aus einem Anemometer erhalten wird.

6. STEUERUNGSVERFAHREN EINER WINDTURBINE, nach Anspruch 5, wobei das Anemometer auf der Windturbine angeordnet ist.

7. STEUERUNGSVERFAHREN EINER WINDTURBINE, nach Anspruch 5, wobei das Anemometer auf einem Wettermast angeordnet ist.

8. STEUERUNGSVERFAHREN EINER WINDTURBINE, nach einem der Ansprüche 2 oder 3, **dadurch gekennzeichnet, dass** es, als Signal, welches den Wind anzeigt, den Blattanstellwinkel verwendet.

9. STEUERUNGSVERFAHREN EINER WINDTURBINE, nach einem der Ansprüche 2 bis 8, **dadurch gekennzeichnet, dass** das Signal, welches die Windturbulenz anzeigt, aus der Abweichung über einen Zeitraum zwischen dem Signal, welches den Wind anzeigt, und dem Mittelwert des Signals, welches den Wind anzeigt, erhalten wird.

10. STEUERUNGSVERFAHREN EINER WINDTURBINE, nach einem der Ansprüche 2 bis 9, **dadurch gekennzeichnet, dass**, wenn die Windturbine angehalten ist, als Signal, welches den Wind anzeigt, eine Messung eines Anemometers, welches auf der Gondel der Turbine angeordnet ist, verwendet wird, wobei der Steuerungsparameter verwendet wird, um die maximale Leistung zu berechnen, die von der Turbine nach einer Inbetriebnahme erzeugt werden soll.

11. STEUERUNGSVERFAHREN EINER WINDTURBINE, nach Anspruch 1, **dadurch gekennzeichnet, dass** es die folgenden zusätzlichen Schritte umfasst:

e. Berechnen eines zweiten Steuerungsparameters, als Integral des Absolutbetrags einer Ableitung eines zweiten Signals, welches den Wind anzeigt, wobei ein solcher zweiter Steuerungsparameter den Grad eines Wechsels in der Windgeschwindigkeit anzeigt, berechnet durch Folgendes,
f. Vergleichen des zweiten Steuerungsparameters mit einem zweiten Schwellenwert,
g. Verringern der maximalen Leistung, die von der Windturbine erzeugt werden soll, wenn der zweite Steuerungsparameter den zweiten Schwellenwert übersteigt.

12. STEUERUNGSVERFAHREN EINER WINDTURBINE, nach Anspruch 11, **dadurch gekennzeichnet, dass** es als zweites Signal, welches den Wind anzeigt, den Blattanstellwinkel verwendet.

13. STEUERUNGSVERFAHREN EINER WINDTURBINE, nach einem der vorhergehenden Ansprüche, **dadurch gekennzeichnet, dass** das Verringern der maximalen Leistung, die von der Windturbine erzeugt werden soll, durch Verringern der Nenndrehzahl des Rotors (18), in anderen Worten, der Drehzahl der Windturbine, wenn die maximal zulässige Leistung hergestellt ist, durchgeführt wird.

14. STEUERUNGSVERFAHREN EINER WINDTURBINE, nach Anspruch 13, **dadurch gekennzeichnet, dass** das Verringern der maximalen Leistung, die von der Windturbine erzeugt werden soll, ebenso den Schritt des Erhöhens des minimalen Blattanstellwinkels (17) umfasst.

15. STEUERUNGSVERFAHREN EINER WINDTURBINE, nach Anspruch 14, **dadurch gekennzeichnet, dass** das Verringern der maximalen Leistung, die von der Windturbine erzeugt werden soll, in dem Starkwind-Betriebszustand (12), wenn die Drehzahl des Rotors durch das Steuern des Blattanstellwinkels begrenzt ist, ebenso den Schritt des im Wesentlichen Konstanthaltens (14) des erforderlichen Drehmoments des Generators umfasst.

16. STEUERUNGSVERFAHREN EINER WINDTURBINE, nach Anspruch 1, **dadurch gekennzeichnet, dass** es ebenso die folgenden zusätzlichen Schritte umfasst:

h. Erhalten eines dritten Steuerungsparameters, welcher die Windgeschwindigkeit, basierend auf dem Blattanstellwinkel, anzeigt.
i. Vergleichen des dritten Steuerungsparameters mit einem dritten Schwellenwert,
j. Aktivieren des Abschaltvorgangs, wenn der dritte Steuerungsparameter den dritten Schwellenwert übersteigt.

17. STEUERUNGSVERFAHREN EINER WINDTURBINE, nach Anspruch 16, **dadurch gekennzeichnet, dass** die Korrelation zwischen dem Blattanstellwinkel und einem Signal, welches den auf die Windturbine auftreffenden Wind anzeigt, wobei es aus mindestens einem Anemometer erhalten wird, überprüft wird, derart, dass, wenn sie nicht überprüft ist, der Abschaltvorgang aktiviert wird.

18. STEUERUNGSVERFAHREN EINER WINDTURBINE, nach Anspruch 17, **dadurch gekennzeichnet, dass** das Signal, welches den auf die Windturbine auftreffenden Wind anzeigt, von einer zentralen Steuerung bereitgestellt wird, welche dieses, basierend auf mindestens einem Anemometer, welches auf einer Windturbine oder einem nahegelegenen Wettermast angeordnet ist, berechnet.

19. STEUERUNGSVERFAHREN EINER WINDTURBINE, nach Anspruch 1, **dadurch gekennzeichnet, dass** es die folgenden zusätzlichen Schritte umfasst:

k. Erhalten eines zweiten Steuerungsparameters, welcher den Grad eines Wechsels bei der Windgeschwindigkeit anzeigt, welcher als Integral des Absolutbetrags der Ableitung eines zweiten Signals, welches den Wind anzeigt, berechnet wird,
l. Vergleichen des zweiten Steuerungsparameters mit einem zweiten Schwellenwert,

m. bei Überschreiten des Schwellenwerts durch den zweiten Steuerungsparameter, Verringern der maximalen Leistung, die von der Windturbine erzeugt werden soll, und/oder Verringern der Drehzahl des Rotors und/oder Verändern der Dynamik der Drehzahl- und Leistungssteuerkreise.

20. WINDTURBINE, welche einen Rotor, ein Blattanstellwinkel-Einstellsystem und eine Recheneinheit umfasst, **dadurch gekennzeichnet, dass** sie gestaltet ist, um ein Verfahren nach einem der vorhergehenden Ansprüche durchzuführen.

**Revendications**

1. PROCÉDÉ DE COMMANDE D'UNE ÉOLIENNE, du type d'éolienne avec une vitesse variable et une commande d'angle de calage de pale, **caractérisé en ce qu'**il comprend les étapes suivantes :

    a. déterminer un signal indicateur de la puissance du vent et un signal indicateur de l'intensité de la turbulence du vent ;
    b. calculer un paramètre de commande sur la base du signal indicateur de la puissance du vent et du signal indicateur de l'intensité de la turbulence du vent, dans lequel ledit paramètre de commande est indicateur des fluctuations prévisibles dans la vitesse de rotation du rotor dues à la turbulence du vent,
    c. comparer le paramètre de commande à une valeur seuil à laquelle les situations de survitesse du rotor ont lieu,
    d. réduire la puissance maximale à générer par l'éolienne si le paramètre de commande dépasse ledit seuil de sorte à empêcher la survitesse du rotor et donc les arrêts de l'éolienne.

2. PROCÉDÉ DE COMMANDE D'UNE ÉOLIENNE, selon la revendication 1, **caractérisé en ce que**, à l'étape b., le paramètre de commande est calculé de la façon suivante :

$$Cp = Pw * TI$$

dans lequel Cp est le paramètre de commande, Pw est le signal indicateur de la puissance du vent et TI est le signal indicateur de l'intensité de la turbulence du vent.

3. PROCÉDÉ DE COMMANDE D'UNE ÉOLIENNE, selon l'une quelconque des revendications 1 ou 2, **caractérisé en ce que** le signal indicateur de la puissance du vent et le signal indicateur de l'intensité de la turbulence du vent sont calculés sur la base d'un signal indicateur du vent.

4. PROCÉDÉ DE COMMANDE D'UNE ÉOLIENNE, selon la revendication 3, **caractérisé en ce que** le signal indicateur de la puissance du vent est obtenu à partir d'une valeur étant le résultat d'un cubage d'un signal indicateur du vent.

5. PROCÉDÉ DE COMMANDE D'UNE ÉOLIENNE, selon l'une quelconque des revendications 3 ou 4, **caractérisé en ce que** le signal indicateur de la puissance du vent est obtenu à partir d'un anémomètre.

6. PROCÉDÉ DE COMMANDE D'UNE ÉOLIENNE, selon la revendication 5, dans lequel l'anémomètre est situé sur l'éolienne.

7. PROCÉDÉ DE COMMANDE D'UNE ÉOLIENNE, selon la revendication 5, dans lequel l'anémomètre est situé sur une tour météorologique.

8. PROCÉDÉ DE COMMANDE D'UNE ÉOLIENNE, selon l'une quelconque des revendications 2 ou 3, **caractérisé en ce qu'**il utilise, comme le signal indicateur du vent, l'angle de calage de pale.

9. PROCÉDÉ DE COMMANDE D'UNE ÉOLIENNE, selon l'une quelconque des revendications 2 à 8, **caractérisé en ce que** le signal indicateur de la turbulence du vent est obtenu à partir de la déviation entre le signal indicateur du vent et la moyenne du signal indicateur du vent sur une période de temps.

10. PROCÉDÉ DE COMMANDE D'UNE ÉOLIENNE, selon l'une quelconque des revendications 2 à 9, **caractérisé en ce que** lorsque l'éolienne est mise en arrêt, comme le signal indicateur du vent, une mesure d'un anémomètre situé sur la nacelle de l'éolienne est utilisée, en utilisant le paramètre de commande afin de calculer la puissance maximale à générer par l'éolienne après un démarrage.

**11.** PROCÉDÉ DE COMMANDE D'UNE ÉOLIENNE, selon la revendication 1, **caractérisé en ce qu'**il comprend les étapes supplémentaires suivantes :

> e. calculer un deuxième paramètre de commande, comme le nombre entier de la valeur absolue d'un dérivé d'un deuxième signal indicateur du vent, ledit deuxième paramètre de commande indicateur de la sévérité d'un changement dans la vitesse du vent étant calculé,
> f. comparer le deuxième paramètre de commande à une deuxième valeur seuil,
> g. réduire la puissance maximale à générer par la turbine éolienne si le deuxième paramètre de commande dépasse la deuxième valeur seuil.

**12.** PROCÉDÉ DE COMMANDE D'UNE ÉOLIENNE, selon la revendication 11, **caractérisé en ce qu'**il utilise comme le deuxième signal indicateur du vent l'angle de calage de pale.

**13.** PROCÉDÉ DE COMMANDE D'UNE ÉOLIENNE, selon l'une quelconque des revendications précédentes, **caractérisé en ce que** la réduction de la puissance maximale à générer par l'éolienne est mise en oeuvre en réduisant la vitesse nominale du rotor (18), en d'autres termes, la vitesse de rotation de l'éolienne lorsque la puissance maximale permise est produite.

**14.** PROCÉDÉ DE COMMANDE D'UNE ÉOLIENNE, selon la revendication 13, **caractérisé en ce que** la réduction de la puissance maximale à générer par l'éolienne comprend également l'étape consistant à augmenter l'angle minimal de calage de pale (17).

**15.** PROCÉDÉ DE COMMANDE D'UNE ÉOLIENNE, selon la revendication 14 **caractérisé en ce que** la réduction de la puissance maximale à générer par l'éolienne comprend également l'étape, dans le régime de vents violents (12) lorsque la vitesse de rotation du rotor est limitée par la commande de l'angle de calage de pale, consistant à maintenir le couple requis du générateur sensiblement constant (14).

**16.** PROCÉDÉ DE COMMANDE D'UNE ÉOLIENNE, selon la revendication 1, **caractérisé en ce qu'**il comprend les étapes supplémentaires suivantes :

> h. obtenir un troisième paramètre de commande de la vitesse du vent basé sur l'angle de calage de pale.
> i. comparer le troisième paramètre de commande à une troisième valeur seuil,
> j. activer la manoeuvre d'arrêt si le troisième paramètre de commande dépasse la troisième valeur seuil.

**17.** PROCÉDÉ DE COMMANDE D'UNE ÉOLIENNE, selon la revendication 16, **caractérisé en ce que** la corrélation est vérifiée entre l'angle de calage de pale et un signal indicateur du vent frappant l'éolienne obtenu à partir d'un anémomètre, de sorte que si elle n'est pas vérifiée, la manoeuvre d'arrêt est activée.

**18.** PROCÉDÉ DE COMMANDE D'UNE ÉOLIENNE, selon la revendication 17, **caractérisé en ce que** le signal indicateur du vent frappant l'éolienne est pourvu d'une commande centrale, qui le calcule basé sur au moins un anémomètre situé sur l'éolienne ou à proximité de la tour météorologique.

**19.** PROCÉDÉ DE COMMANDE D'UNE ÉOLIENNE, selon la revendication 1, **caractérisé en ce qu'**il comprend les étapes supplémentaires suivantes :

> k. obtenir un deuxième paramètre de commande, indicateur de la sévérité d'un changement dans la vitesse du vent, calculée comme le nombre entier de la valeur absolue du dérivé d'un deuxième signal indicateur du vent,
> l. comparaison du deuxième paramètre de commande avec une deuxième valeur seuil,
> m. si le deuxième paramètre de commande dépasse la valeur seuil, réduction de la puissance maximale à générer par l'éolienne et/ou réduction de la vitesse de rotation du rotor et/ou modification de la dynamique de la vitesse et des boucles de commande de puissance.

**20.** ÉOLIENNE, comprenant un rotor, un système de réglage de calage de pale et une unité de calcul, **caractérisée en ce qu'**elle est configurée pour mettre en oeuvre un procédé selon l'une quelconque des revendications précédentes.

Fig.1

Fig.2

Fig.3

Fig. 4

Fig.5

Fig.6

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2428748 A
- EP 1988284 A